# EUROPÄISCHE PATENTSCHRIFT

(11) **EP 0 561 188 B1**
(45) Veröffentlichungstag und Bekanntmachung des Hinweises auf die Patenterteilung: **09.08.1995**
(21) Anmeldenummer: 93102948.2
(22) Anmeldetag: 25.02.1993
(51) Int. Cl.: B65H 54/44, G05D 13/62, H02P 7/74

(54) **Verfahren zum Aufspulen von einer Spuleinrichtung zugeführtem, band- oder fadenförmigem Spulgut in Kreuzspulung mit Präzisionswicklung**
Procedure for the precision crosswinding of ribbon-like or yarn-like material
Procédé pour le bobinage en enroulement croisé de précision d'un matériau en forme de bande ou de fil

(30) Priorität: 16.03.1992 DE 4208395
(43) Veröffentlichungstag der Anmeldung: 22.09.1993
(73) Patentinhaber: GEORG SAHM GMBH & CO. KG, D-37269 Eschwege (DE)
(72) Erfinder: Pöppinghaus, Winfried, W-3437 Bad Sooden-Allendorf (DE); Siebertz, Peter, W-4236 Hamminkeln (DE)
(74) Vertreter: Rehberg, Elmar, Dipl.-Ing.

(56) Entgegenhaltungen:
- EP-A- 0 248 406
- DE-A- 2 512 213
- US-A- 4 394 986

## Beschreibung

Die Erfindung bezieht sich auf ein Verfahren zum Aufspulen von einer Spuleinrichtung zugeführtem, band- oder fadenförmigem Spulgut in Kreuzspulung mit Präzisionswicklung, in dem die Integrale der Winkelgeschwindigkeit (Impulse) der Spule mit einem ersten Fühler erfaßt und in einem ersten zugeordneten Zähler addiert und die Integrale der Winkelgeschwindigkeit (Impulse) des Antriebs des Changierfadenführers mit einem zweiten Fühler erfaßt und in einem zweiten zugeordneten Zähler addiert werden, die Summen der Integrale der Winkelgeschwindigkeit miteinander verglichen und abhängig davon der Antrieb des Changierfadenführers geregelt wird. Die Erfindung zeigt gleichzeitig eine Spuleinrichtung zur Durchführung des Verfahrens auf. Unter fadenförmigem Spulgut werden insbesondere Garne oder Bändchen verstanden.

Ein Verfahren der eingangs beschriebenen Art ist aus der US-PS 4 093 146 bekannt. Dabei werden spezielle Impulse abgebende Fühler eingesetzt. Zwischen dem Antrieb der Spule und dem Impulsgeber ist ein Getriebe vorgesehen, mit dem das Spulverhältnis bestimmt wird. Die registrierten Impulse werden ausschließlich dazu benutzt, um einen Schrittmotor anzusteuern, der den Changierfadenführer antreibt. Die Verwendung des Schrittmotors dient dazu, die vom Changierfadenführer überstrichene Breite zu verändern. Das Verfahren zum Aufspulen ist infolge der Verwendung des Zahnräder aufweisenden Getriebes mit allen Nachteilen behaftet, die im Einzelnen noch erläutert werden.

Aus der EP-PS 55 849 ist ein Verfahren und eine Spuleinrichtung bekannt, bei denen Kreuzspulung in gestufter Präzisionswicklung Anwendung findet. Der Spule bzw. der Spulspindel ist ein erster Tachometer zugeordnet, der die Drehzahl der Spule pro Zeiteinheit feststellt und an einen Regler weitergibt. Auch der Antrieb des Changierfadenführers ist mit einem Tachometer ausgestattet. Die beiden Werte der Tachometer werden verglichen und einem Regler zugeführt, der seinerseits den Antriebsmotor des Changierfadenführers beeinflußt. Die Verwendung von Tachometern hat verschiedene Nachteile. Sie müssen in regelmäßigen zeitlichen Abständen abgeglichen werden, arbeiten temperaturabhängig und ihre Genauigkeit läßt die Einhaltung eines speziellen Spulverhältnisses nur bedingt zu. Ein Tachometer ist ein analog arbeitendes Meßinstrument, welches bauartbedingt entsprechend ungenau ist.

Auch die EP-OS 194 524 zeigt ein Verfahren zum Aufwickeln von Fäden in Kreuzspulung mit gestufter Präzisionswicklung. Zur Erzielung einer optimalen Fadenablage auf der Spule müssen die Spulverhältnisse nicht nur mit großer Genauigkeit vorberechnet, sondern auch genau eingehalten werden. Da die elektrische und elektronische Meß- und Regelungstechnik, die für die Messung der Drehzahlen und die Einhaltung der Proportionalität zwischen dem Antrieb der Spulspindel und dem Antrieb des Changierfadenführers begrenzt sind, wird zur Verbesserung des Wicklungsaufbaus die Modulation des Spulverhältnisses in jeder Aufwindephase vorgeschlagen. Die Modulationsbreite soll weniger als 0,1 % betragen.

Zur Verdeutlichung der Problematik, mit der sich die vorliegende Erfindung beschäftigt, sei im Einzelnen auf Folgendes hingewiesen:

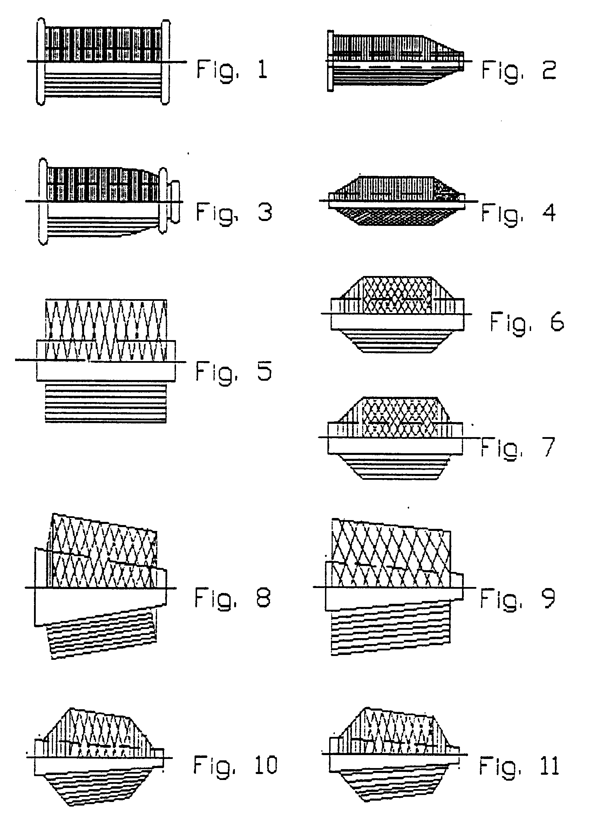

Die Spuleinrichtung stellt aus dem zugeführten Spulgut eine Spule her, die, abhängig von der Bauart der Spuleinrichtung, die unterschiedlichsten Formen aufweisen kann, wie die Figuren 1 bis 11 zeigen.

Hierbei zeigen die Figuren 1 bis 4 Spulen in Parallelwicklung: das Spulgut wird mit unmittelbar nebeneinanderliegenden Windungen aufgespult, die Steigung des Spulguts auf der Hülse bzw. Spule entspricht etwa dem Durchmesser/der Breite des Spulguts. Damit das Spulgut an den Seiten einer solchen Spule nicht abrutscht, sind besondere Maßnahmen erforderlich, wie z. B. die Abstützung der Wicklungen mittels Flanschen an der Spulhülse, wie Figur 1 zeigt, und/oder mittels einer besonderen Form des Spulenaufbaus, z. B. eine Abschrägung der Stirnseiten der Spule, wie Figuren 2, 3 und 4 zeigen.

Die Figuren 5 bis 11 zeigen Spulen in Kreuzspulung: das Spulgut wird mit relativ zum Durchmesser/zur Breite des Spulguts großen Steigung auf der Hülse bzw. Spule verlegt. Auf diese Weise entstehen an den Stirnseiten der Spule mehr oder weniger stark abgerundete Umkehrstellen des Spulguts. Da diese von den nachfolgenden Windungen des Spulguts abgedeckt ewrden, ist ein stirnseitiges Abrutschen des Spulguts verhindert. Für besondere Anwendungszwecke können auch hier die Stirnseiten der Spulen eine besondere Form, z. B. eine Abschrägung, aufweisen, wie Figuren 6 und 7 zeigen.

Sowohl die Hülsen auch auch die Spulen müssen nicht zwangsläufig eine zylindrische Form aufweisen, sie können auch z. B. kegelig sein, wie Figuren 8 bis 11 zeigen.

Eine Spuleinrichtung weist in der Hauptsache eine Spindel, die auf einer evtl. erforderlichen Spulhülse das Spulgut aufwindet, also die Spulspindel, und ein Verlegeorgan auf, das das Spulgut in Längsrichtung der Spulspindel innerhalb eines bestimmten Bereichs, der Bewicklungsbreite oder des Hubs, hin- und herverlegt.

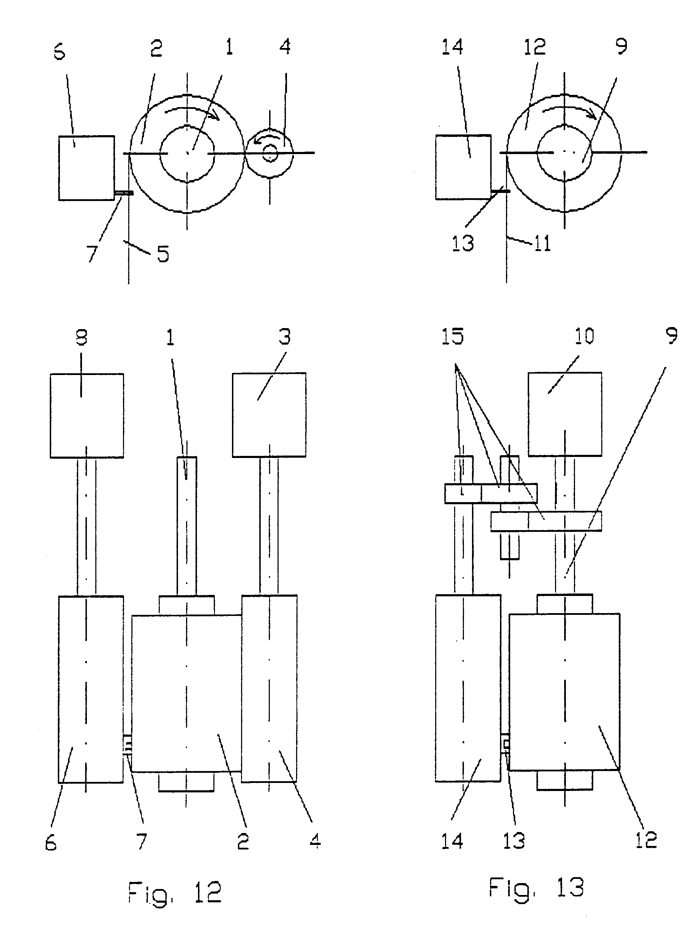

Die Spulspindel kann mittels Umfangsantrieb an der sich auf der Spulspindel bildenden Spule, wie Figur 12 in Vorderansicht und Aufsicht schematisch zeigt, oder mittels direktem Antrieb der Spulspindel, wie Figur 13 in Vorderansicht und Aufsicht schematisch zeigt, angetrieben sein.

Bei Umfangsantrieb an der sich auf der Spulspindel 1 bildenden Spule 2 mittels einer Treibwalze 4 ergibt sich bei konstanter Drehzahl der mittels Motor 3 getriebenen Treibwalze 4 zwangsläufig eine konstante Umfangsgeschwindigkeit der Spule und somit eine annähernd konstante Aufwindegeschwindigkeit des Spulguts 5.

Bei direktem Antrie der Spulspindel 9 mittels Motor 10 muß zum Erreichen einer konstanten Aufwindegeschwindigkeit des Spulguts 11 der Motor 10 mit wachsendem Durchmesser der Spule 12 kontinuierlich in der Drehzahl abgeregelt werden.

Die Drehungen der Spulspindel 1 bzw. 9 und die Linearbewegung des Changierfadenführers 7 bzw. 13 im Verlegeorgan 6 bzw. 14 können in unterschiedlicher Beziehung zueinander stehen. Hieraus ergibt sich ein grundsätzlich unterschiedlicher Aufbau der Spule.

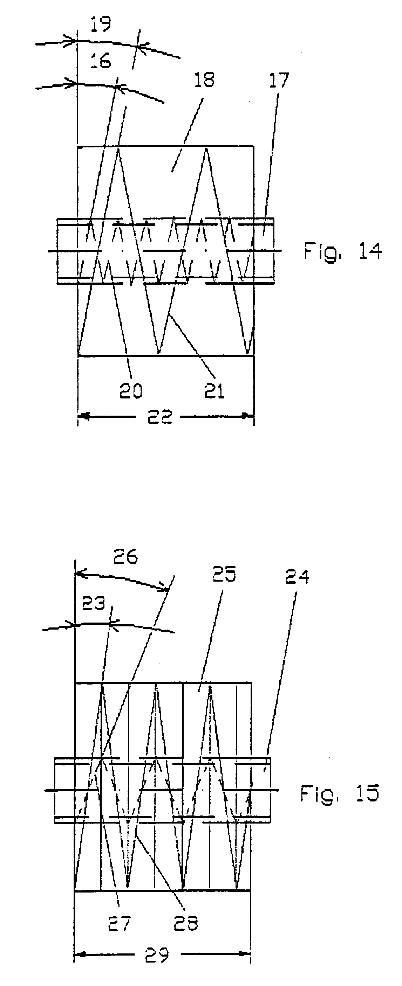

Wenn, wie es Figur 12 zeigt, das Verlegeorgan 6 mmit Changierfadenführer 7 mittels Motor 8 mit einer Drehzahl unabhängig von der Drehzahl der Spulspindel 1 angetrieben wird, ergibt sich ein Spulenaufbau gemäß Figur 14, der als Kreuzspulung mit wilder Wicklung bezeichnet wird.

Der gewählte Anfangssteigungswinkel 16 des Spulguts auf der Spulhüse 17 - Beginn des Spulvorgangs, der Spulreise - bleibt bis zum Ende der Spulreise, dem größten Durchmesser der Spule 18, konstant - Endsteigungswinkel 19 -, die Anzahl der Windungen 20 bzw. 21 auf die Bewicklungsbreite 22 nimmt stetig ab. Es entsteht eine Spule mit unterschiedlicher Packungsdichte des Spulmaterials bei jedem Spulendurchmesser.

Wenn, wie es Figur 13 zeigt, das Verlegeorgan 14 mit Changierfadenführer 13 getrieblich mit der Spulspindel 9 verbunden ist, z. B mittels Stirnradgetriebe 15, ergibt sich ein Spulenaufbau gemäß Figur 15, der als Kreuzspulung mit Präzisionswicklung bezeichnet wird.

Der Anfangssteigungswinkel 23 des Spulguts auf der Spulhülse 24 - Beginn der Spulreise - nimmt bis zum Ende der Spulreise, dem größtem Durchmesser der Spule 25, Stetig ab, die Anzahl der Windungen 27 bzw. 28 auf die Bewicklungsbreite der Spule 29 bleibt konstant. Es entsteht eine Spule mit gleichbleibender Packungsdichte des Spulmaterials bei jedem Spulendurchmesser.

Aus der Wahl der Übersetzung des z. B. Stirnradgetriebes 15 von Figur 13 erhält man ein entsprechendes Verhältnis von einem Doppelhub des Changierfadenführers 13 zur Anzahl Umdrehungen der Spulspindel 9. Doppelhub bezeichnet den Weg des Changierfadenführers 13 von einem Ende der Bewicklungsbreite 22 (in Figur 14) zum anderen Ende und wieder zurück. Das Verhältnis 1 Doppelhub zu Anzahl der Spulspindelumdrehungen wird Spulverhältnis genannt.

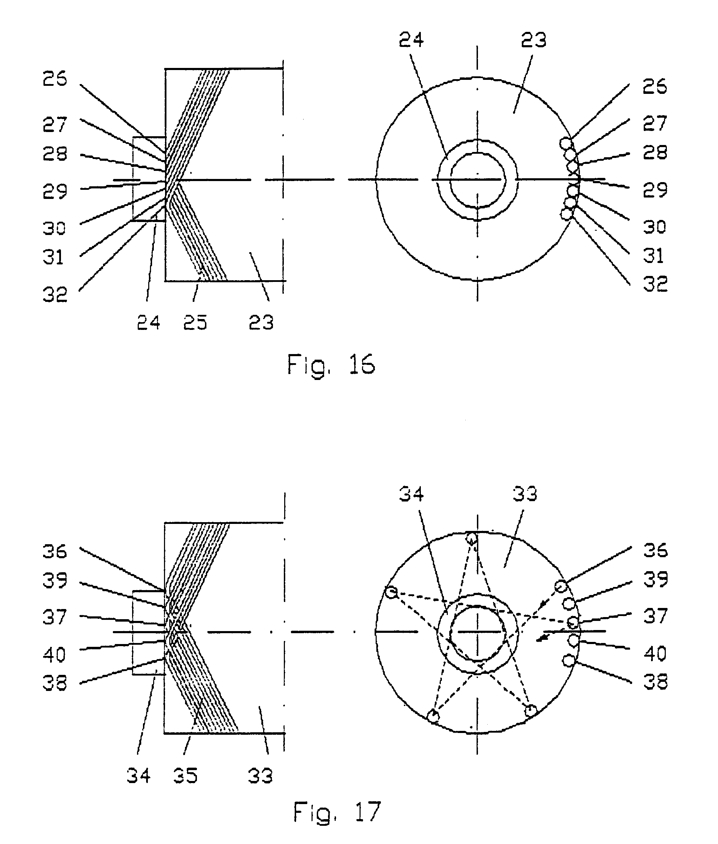

Je nach gewähltem Spulverhältnis erhält man einen unterschiedlichen Spulenaufbau. So zeigt z. B. Figur 16 schematisch eine Spule 23 mit Spulhülse 24 mit einigen Lagen des Spulguts 25 in geschlossener Präzisions-Kreuzwicklung: das Spulgut 25 ist nach jedem Doppelhub in der Reihenfolge der Punkte 26 bis 32 auf der Spule 25 abgelegt. Die Punkte 26 bis 32 stellen die Umkehrpunkte des Spulguts an einer Stirnseite der Spule 23 dar. Das Nenn-Spulverhältnis sei hier z. B. 1:5. Für die Auslegung des tatsächlichen Spulverhältnisses ist noch der Anteil zu berechnen, der sich aus der Dicke oder Breite des Spulguts ergibt, damit die einzelnen Lagen des Spulguts genau nebeneinander zu liegen kommen und nicht etwa genau aufeinanderliegen.

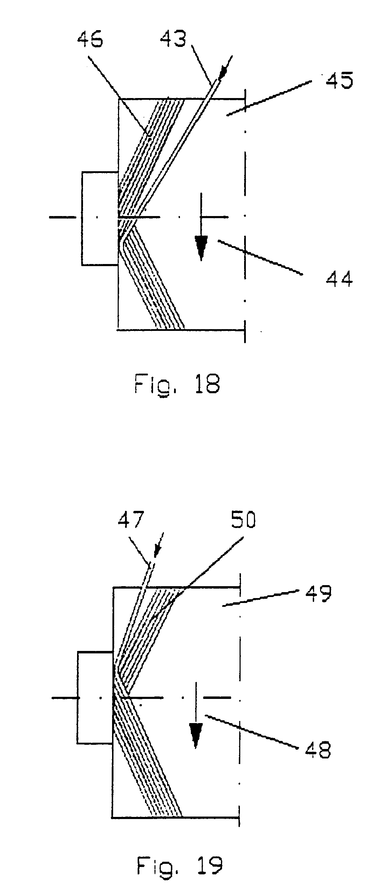

Figur 17 zeigt als weiteres Beispiel eine Spule 33 mit Spulhülse 34 und einigen Lagen des Spulguts 35 in Präzisions-Rautenwicklung. Die einzelnen Lagen des Spulguts 35 sind hier in der Reihenfolge der Punkte 36 bis 40 auf der Spule 33 abgelegt. Der punktierte Linienzug deutet die Reihenfolge an, in der das Spulgut 35 an der Stirnseite der Spule 33 abgelegt ist: beginnend bei Punkt 36 werden erst vier weitere Umkehrpunkte durchlaufen, ehe das Spulgut 35 bei Punkt 37 wieder in der Nähe des Startpunkts, Punkt 36, abgelegt wird. Zudem wird im weiteren Verlauf des Spulvorgangs noch zwischen den Punkten 36 und 37 bei Punkt 39 eine weitere Lage des Spulguts 35 abgelegt. Zwischen den einzelnen, nebeneinanderliegenden Spulgutlagen ist ein definierter Abstand vorhanden. Dadurch wird ein offener Aufbau des Spulenpakets erreicht, wie er z. B. für Färbespulen benötigt wird. Das Nenn-Spulverhältnis sei hier z. B. 1:5,2. Für die Auslegung des tatsächlichen Spulverhältnisses ist auch hier noch der Anteil zu berechnen, der sich aus der Dicke oder Breite des Spulguts ergibt, damit die aufeinanderfolgenden Lagen des Spulguts wie gewünscht nebeneinander zu liegen kommen und nicht etwa genau aufeinanderliegen.

Der Anteil, der sich aus der Dicke oder Breite des Spulguts ergibt, damit die aufeinanderfolgenden Lagen des Spulguts wie gewünscht nebeneinander zu liegen kommen, wird als δ-Wert bezeichnet. Bei einem negativen δ-Wert erhält man eine vorwärtslaufende Spulgutverlegung, wie es Figur 18 zeigt. Das auflaufende Spulgut 43 wird vor dem auf der in Pfeilrichtung 44 drehenden Spule 45 befindlichen Spulgut 46 abgelegt. Bei einem positiven δ-Wert erhält man dagegen eine rückwärtslaufende Spulgutverlegung, wie es Figur 19 zeigt. Das auflaufende Spulgut 47 wird hinter dem auf der in Pfeilrichtung 48 drehenden Spule 49 befindlichen Spulgut 50 abgelegt.

Figur 20 zeigt zur Erläuterung der figuren 21 bis 24 eine Spule 51 in Kreuzspulung mit Präzisionswicklung mit Spulhülse 52 und dem Drehrichtungspfeil 53. Auf der Hülse wird das Spulgut mit dem Anfangssteigungswinkel 54 und am äußeren Spulendurchmesser mit dem Endsteigungswinkel 55 verlegt.

In Figur 21 ist der Ausschnitt zweier direkt nebeneinanderliegender Bändchen als Beispiel für Spulgut auf der Spulhülse mit dem Anfangssteigungswinkel 56 und der Bändchenbreite 57 dargestellt. Aus diesen beiden Werten ergibt sich der erforderliche δ-Wert 58.

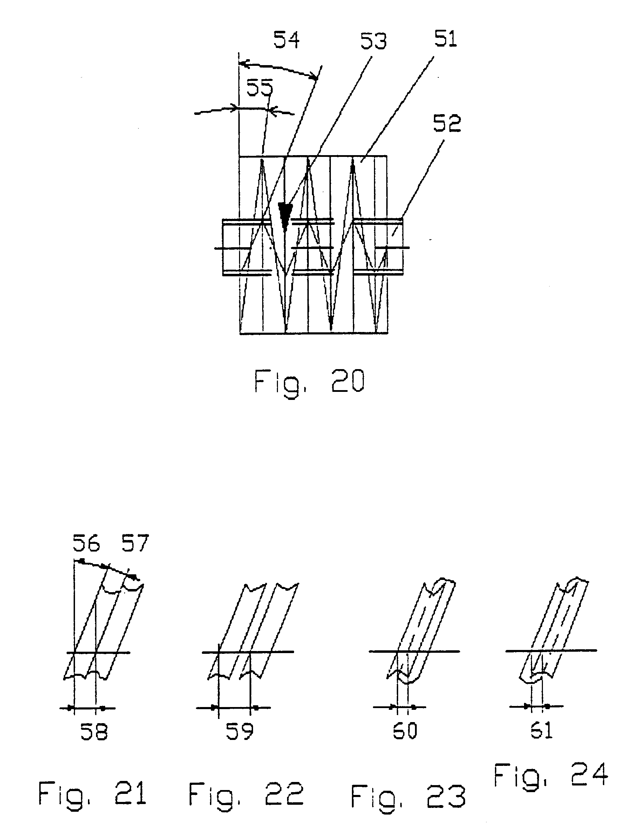

Wie schon aus der Beschreibung der Figur 17 ersichtlich, müssen zwei aufeinanderfolgende Lagen des Spulguts nicht notwendigerweise dicht nebeneinanderliegen; sie können einen Zwischenraum aufweisen, wie in Figur 22 dargestellt ist, oder sie können - speziell bei Bändchen - auch teilweise übereinanderliegend angeordnet sein, wie es Figur 23 als rückwärtslaufende und in Figur 24 als vorwärtslaufende Spulgutverlegung dargestellt ist.

Aus dem oben genannten beispielhaften Nenn-Spulverhältnis von 1:5 ergibt sich unter Berücksichtigung des δ-Werts z. B. ein tatsächlich erforderliches Spulverhältnis von 1:5,13256479834 ..., welches nun so genau wie möglich mittels z. B. Stirnräder nachgebildet werden muß. In der Praxis hat sich gezeigt, daß schon eine Abweichung in der sechsten oder gar fünften Nachkommastelle des Spulverhältnisses einen wesentlichen Einfluß auf den Spulenaufbau hat.

Aus diesen Ausführungsformen ist ersichtlich, daß das Spulverhältnis vom angestrebten Spulenaufbau, der Breite bzw. Dicke des Spulguts sowie der Anmessungen von Spulhülse und Spule abhängig ist. Ein formschlüssiges Spulgetriebe wie das beispielsweise genannte Stirnradgetriebe 15 ist daher in der Regel nur geeignet, wenn alle genannten Paramter unveränderlich sind; die Änderung auch nur eines dieser Parameter bedingt meist einen Austausch der Stirnräder des Getriebes, was einen erheblichen Kostenaufwand darstellt, da eine Spulanlage aus einer großen Anzahl Spuleinrichtungen bestehen kann. Nicht zuletzt stellt ein derartiges Getriebe nur einen Kompromiß dar, da in den meisten Fällen das errechnete Spulverhältnis mit den möglichen Stirnrädern nicht verwirklicht wrden kann.

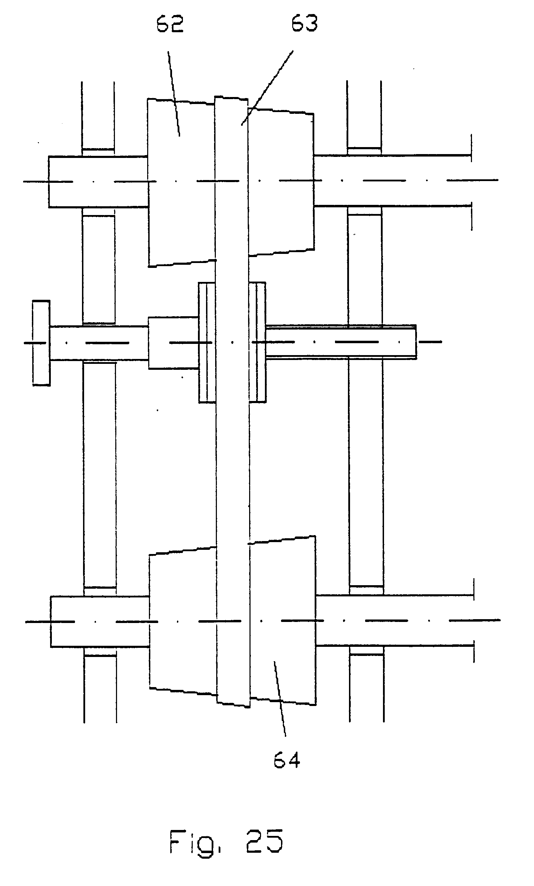

Zur Lösung der genannten Probleme wird in der Praxis häufig ein Regelgetriebe als Spulgetriebe eingesetzt, z. B. ein Konoidgetriebe, wie es schematisch in Figur 25 dargestellt ist. Durch seitliches Verschieben des Flachriemens 62 auf den beiden gegenläufig konischen Riemenscheiben 63 und 64 kann das Spulverhältnis innerhalb bestimmter Grenzen stufenlos variiert werden. Nachteilig wirkt sich bei diesem Getriebe aus, daß es kraftschlüssig und damit schlupfbehaftet ist und somit der geforderten Genauigkeit nicht genügt. Selten kann die Einstellung der geforderten Genauigkeit gewährleistet werden und kaum auf alle Spuleinrichtungen einer Spulanlage, die aus vielen Spuleinrichtungen bestehen kann, übertragen werden. Weiterhin nachteilig wirken sich die engen Grenzen aus, in denen das Spulverhältnis variiert werden kann.

Neuere Techniken messen die Drehzahlen von Spulspindel und Verlegeorgan, vergleichen das gemessene Verhältnis der Drehzahlen mit dem geforderten Spulverhältnis und regeln das beispielsweise genannte Konoidgetriebe bei Erreichen einer bestimmten Größe der Drehzahlabweichung entsprechend nach. Das gleiche Verfahren wird auch angewandt, wenn das Verlegeorgan statt mit einem Konoidgetriebe mittels eines separaten Motors angetrieben wird. Um die Nachregelung einzuleiten, muß also erst eine gewisse Drehzahlabweichung zwischen Soll- und Istwert erreicht sein. Bis zum Erreichen der erlaubten Drehzahlabweichung und danach bis zum Ausregeln auf Gleichheit von Soll- und Istwert wird folglich mit einem ungenauen Spulverhältnis gespult, das, wenn nicht bei der gesamten Spule, so doch mindestens in einigen Spuldurchmesserbereichen, zu schlechtem Spulenaufbau führt.

Um die Fehlergröße dieser bekannten Verfahren aufzuzeigen, sei angenommen, das Verhältnis zwischen der Drehzahl des Antriebs der Spulspindel und der Drehzahl des Antriebs des Verlegeorgans weise die typische zulässige Abweichung von 1 o/oo auf. Hieraus ergibt sich bei einer Drehzahl des Antriebs des Verlegeorgans von z. B. 3000 1/min ein Fehler von bis zu 3 Umdrehungen in einer Minute. Bei der Dauer einer Spulreise von z. B. 12 Stunden ergäbe dies einen Fehler von bis zu 2160 Umdrehungen oder bis zu 777600 Winkelgraden.

Der Erfindung liegt die Aufgabe zugrunde, ein Verfahren der eingangs beschriebenen Art bereitzustellen, mit dem Spulverhältnisse in einer Genauigkeit von mindestens sieben Nachkommastellen realisiert und eingehalten werden können.

Erfindungsgemäß wird dies bei dem Verfahren der eingangs beschriebenen Art dadurch erreicht, daß die Impulse des ersten Fühlers und die Impulse des zweiten Fühlers jeweils in den zugeordneten Zählern über die gesamte Spulreise addiert werden, und daß das Verhältnis der so entstandenen Summen permanent mit einem oder mehreren nacheinander vorwählbaren Spulverhältnissen verglichen und der Antrieb des Changierfadenführers so geregelt wird, daß das Verhältnis der Summen der beiden zugeordneten Zähler während der gesamten Spulreise dem vorgewählten Spulverhältnis bzw. den Spulverhältnissen entspricht.

Gemäß der Erfindung wird die analoge, momentane Erfassung der Drehzahl der Antriebe durch eine digitale Erfassung (Impulserfassung) ersetzt. Damit werden während einer Spulreise keine Fehler in der Abweichung des Spulverhältnisses aufaddiert, sondern die Regelung erfolgt derart, daß diese Fehler beseitigt und das genau vorberechnete Spulverhältnis über die gesamte Spulreise exakt eingehalten wird. Damit wird genau die theoretisch erforderliche Garnlage erreicht, und zwar über den gesamten Spulenaufbau. Die erzielbare Genauigkeit ist wesentlich größer als z. B. bei aufwendigen stufenlosen Getrieben. Das Verfahren läßt sich auch vergleichsweise einfacher durchführen und sämtliche Nachteile, die mit der Verwendung von Zahnrädern verbunden sind, sind ohnehin beseitigt. Die Anzahl der realisierbaren Spulverhältnisse ist fast unbegrenzt.

Pro Umdrehung der Spule und pro Umdrehung des Antriebs des Changierfadenführers werden eine Vielzahl von Integralen der Winkelgeschwindigkeit (Impulse) verarbeitet. Durch die Erhöhung der Anzahld der Impulse steigt die Genauigkeit. Es können beispielsweise pro Umdrehung 1024 Impulse erzeugt und verarbeitet werden. Der Antrieb des Changierfadenführers kann so geregelt werden, daß eine Genauigkeit von +/- 1 Winkelgrad (entsprechend 3 Impulsen) zugelassen bzw. ausgeregelt wird.

Die Integrale der Winkelgeschwindigkeiten der Spulspindel und des Changierfadenführers, also der Winkelschritte (Impulse) werden separat erfaßt, in ausreichend hoher Auflösung, durch separate Addition aller während einer Spulreise aufgenommenen Impulse vom Antrieb der Spulspindel und dem Antrieb des Changierfadenführers. Die verwendeten Zähler sind voneinander unabhängig und können als Hard- und/oder Softwarezähler ausgebildet sein. Es findet ein permanenter Vergleich der Summenverhältnisse auf Übereinstimmung mit dem gewählten Spulverhältnis mittels eines Rechners statt, der über einen Regler den Antrieb des Changierfadenführers beeinflußt. Die Beeinflussung bzw. Ausregelung wird beendet, sobald das Verhältnis der Summen der beiden Zähler wieder dem Spulverhältnis entspricht.

Die Spuleinrichtung zur Durchführung des Verfahrens kennzeichnet sich erfindungsgemäß dadurch, daß als Fühler Impulsgeber vorgesehen sind, daß den Impulsgebern Zähler nachgeordnet sind, und daß ein Rechner zur Verarbeitung der beiden Zählerstände vorgesehen ist, der mit dem Regler zur Regelung des Antriebs des Changierfadenführers verbunden ist. Die Zähler weisen eine für die Spulreise ausreichende Kapazität auf.

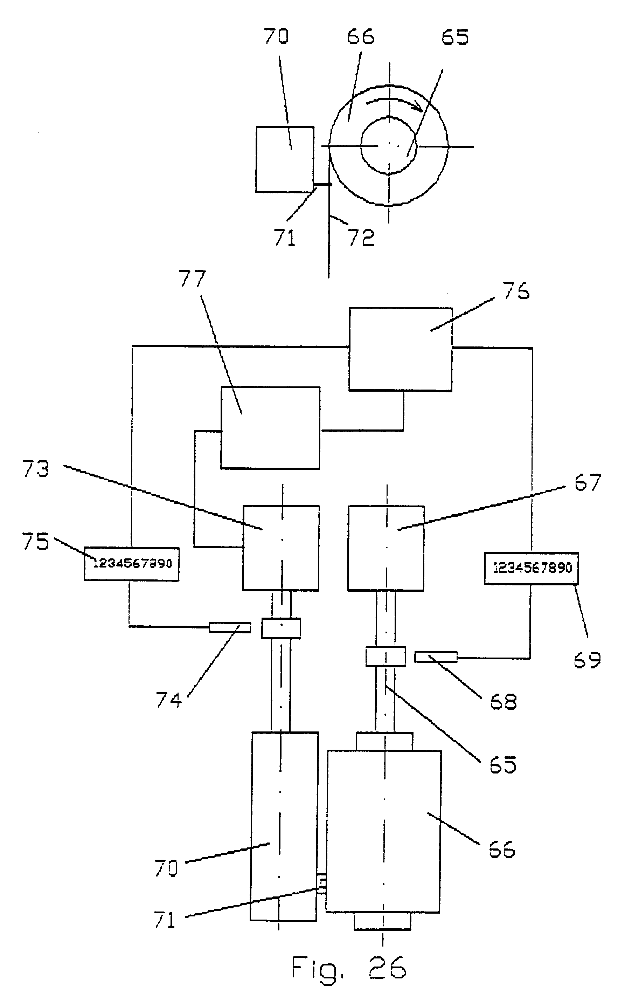

In Figur 26 sind die wesentlichen Elemente einer Spuleinrichtung schematisch verdeutlicht. Es ist eine Vorderansicht und eine Aufsicht mit der Spulspindel 65, der Spule 66, dem Antriebsmotor 67 der Spulspindel, dem ersten zugeordneten Fühler 68, dem ersten zugeordneten Zähler 69, dem Verlegeorgan 70, dem Changierfadenführer 71, dem auflaufenden Spulgut 72, dem Antriebsmotor 73 des Verlegeorgans, dem zweiten zugeordneten Fühler 74, dem zweiten zugeordneten Zähler 75, dem Rechner 76 und dem Regler 77 dargestellt.

Am Anfang einer Spulreise weisen die beiden zugeordneten Zähler69 und 75 den Wert 0 auf. Sobald der Antriebsmotor 67 die Spulspindel 65 in Drehung versetzt, erhält der erste zugeordnete Zähler 69 vom ersten zugeordneten Fühler 68 z. B. 1024 Impulse pro Spulspindelumdrehung und registriert diese. Unmittelbar nach Beginn der Spulspindeldrehung weist der zweite zugeordnete Zähler 75 noch den Wert 0 aus. Sofort wertet der Rechner 76 den Wert des ersten zugehörigen Zählers 69 aus, setzt diesen in das Verhältnis zum Wert des zweiten zugeordneten Zählers 75 und vergleicht dieses Verhältnis mit dem vorgegebenen Spulverhältnis. Da hier zwangsläufig eine Abweichung vorhanden ist, aktiviert der Rechner sofort den Regler 77. Dieser steuert daraufhin den Antriebsmotor 73 an, woraufhin der zweite zugeordnete Zähler 75 vom zweiten zugeordneten Fühler 74 z. B. ebenfalls 1024 Impulse pro Umdrehung des Antriebs des Verlegeorgans 70 erhält. Diesen Wert nimmt wiederum der Rechner auf, wertet ihn wie zuvor beschrieben aus und synchronisiert über den Regler 73 den Antrieb des Verlegeorgans 70 im Sinn des gewünschten Spulverhältnisses. Dieser Vorgang wiederholt sich permanent, und zwar mit einer Taktrate, die nur eine Abweichung von +/- 0,35 bis maximal 1 Winkelgrad zuläßt. Da die Impulse der beiden zugeordneten Fühler 68 und 74 während einer Spulreise permanent in den beiden zugeordneten Zählern 69 und 75 aufaddiert und diese Summen vom Rechner 76 ausgewertet und über den Regler 77 und den Antriebsmotor 73 des Verlegeorgans 70 im Sin des vorgegebenen Spulverhältnisses ausgeregelt werden, wird ein einmal innerhalb der Grenzen von +/- 0, 35 bis maximal 1 Winkelgrad aufgetretener Fehler sofort korrigiert; die Abweichung zwischen Soll- und Istspulverhältnis ist also zu keinem Zeitpunkt der Spulreise größer als +/- 1 Winkelgrad. Durch entsprechende Dimensionierung des Mikroprozessors oder der Mikroprozessoren, der oder die im Rechner 76 integriert ist oder sind, kann ein fast beliebig genaues Spulverhältnis dargestellt werden; das Spulverhältnis ist nicht von der Verwendbarkeit irgendwelcher Teile, z. B. Stirnräder, abhängig, es kann dem errechneten Wert entsprechen.

### Bezugszeichenliste:

- 1: = Spulspindel
- 2: = Spule
- 3: = Motor
- 4: = Treibwalze
- 5: = Spulgut
- 6: = Verlegeorgan
- 7: = Changierfadenführer
- 8: = Motor
- 9: = Spulspindel
- 10: = Motor
- 11: = Spulgut
- 12: = Spule
- 13: = Changierfadenführer
- 14: = Verlegeorgan
- 15: = Stirnradgetriebe
- 16: = Anfangssteigungswinkel
- 17: = Spulhülse
- 18: = Spule
- 19: = Endsteigungswinkel
- 20: = Windungen
- 21: = Windungen
- 22: = Bewicklungsbreite
- 23: = Spule
- 24: = Spulhülse
- 25: = Spulgut
- 26: = Umkehrpunkte des Spulguts
- 27: = Umkehrpunkte des Spulguts
- 28: = Umkehrpunkte des Spulguts
- 29: = Umkehrpunkte des Spulguts
- 30: = Umkehrpunkte des Spulguts
- 31: = Umkehrpunkte des Spulguts
- 32: = Umkehrpunkte des Spulguts
- 33: = Spule
- 34: = Spulhülse
- 35: = Spulgut
- 36: = Umkehrpunkte des Spulguts
- 37: = Umkehrpunkte des Spulguts
- 38: = Umkehrpunkte des Spulguts
- 39: = Umkehrpunkte des Spulguts
- 40: = Umkehrpunkte des Spulguts
- 41: = Umkehrpunkte des Spulguts
- 42: = Umkehrpunkte des Spulguts
- 43: = auflaufendes Spulgut
- 44: = Pfeilrichtung
- 45: = Spule
- 46: = abgelegtes Spulgut
- 47: = auflaufendes Spulgut
- 48: = Pfeilrichtung
- 49: = Spule
- 50: = abgelegtes Spulgut
- 51: = Spule
- 52: = Spulhülse
- 53: = Drehrichtungspfeil
- 54: = Anfangssteigungswinkel
- 55: = Endsteigungswinkel
- 56: = Anfangssteigungswinkel
- 57: = Bändchenbreite
- 58: = δ-Wert
- 59: = δ-Wert
- 60: = δ-Wert
- 61: = δ-Wert
- 62: = Flachriemen
- 63: = Riemenscheibe
- 64: = Riemenscheibe
- 65: = Spulspindel
- 66: = Spule
- 67: = Antriebsmotor
- 68: = erster zugeordneter Fühler
- 69: = erster zugeordneter Zähler
- 70: = Verlegeorgan
- 71: = Changierfadenführer
- 72: = auflaufendes Spulgut
- 73: = Antriebsmotor
- 74: = zweiter zugeordneter Fühler
- 75: = zweiter zugeordneter Zähler
- 76: = Rechner
- 77: = Regler

## Patentansprüche

1. Verfahren zum Aufspulen von einer Spuleinrichtung Zugeführtem, band- oder fadenförmigem Spulgut in Kreuzspulung mit Präzisionswicklung, in dem Integrale der Winkelgeschwindigkeit (Impulse) der Spule mit einem ersten Fühler erfaßt und in einem ersten zugeordneten Zähler addiert und Integrale der Winkelgeschwindigkeit (Impulse) des Antriebs des Changierfadenführers mit einem zweiten Fühler erfaßt und in einem zweiten zugeordneten Zähler addiert werden, die Summen der Integrale der Winkelgeschwindigkeiten miteinander verglichen und abhängig davon der Antrieb des Changierfadenführers geregelt wird, dadurch gekennzeichnet, daß die Impulse des ersten Fühlers und die Impulse des zweiten Fühlers jeweils in den zugeordneten Zählern über die gesamte Spulreise addiert werden, und daß das Verhältnis der so entstandenen Summen permanent mit einem oder mehreren nacheinander vorwählbaren Spulverhältnissen verglichen und der Antrieb des Changierfadenführers so geregelt wird, daß das Verhältnis der Summen der beiden zugeordneten Zähler während der gesamten Spulreise dem vorgegebenen Spulverhältnis bzw. den Spulverhältnissen entspricht.

2. Verfahren nach Anspruch 1, dadurch gekennzeichnet, daß pro Umdrehung der Spule und pro Umdrehung des Antriebs des Changierfadenführers eine Vielzahl von Integralen der Winkelgeschwindigkeit (Impulse) verarbeitet werden.

3. Verfahren nach Anspruch 2, dadurch gekennzeichnet, daß pro Umdrehung 1024 Impulse erzeugt und verarbeitet werden.

4. Verfahren nach einem oder mehreren der Ansprüche 1 bis 3, dadurch gekennzeichnet, daß der Antrieb des Changierfadenführers mit einer Genauigkeit von +/- 1 Winkelgrad geregelt wird.

5. Spuleinrichtung zur Durchführung des Verfahrens nach einem oder mehreren der Ansprüche 1 bis 4, mit einem Antrieb (67) für die Spule (66) und einem ersten zugeordneten Impulsgeber (68) mit nachgeschaltetem Zähler (69), mit einem Antrieb (73) für den Changierfadenführer (71) und einem zweiten zugeordneten Impulsgeber (74) mit nachgeschaltetem zweiten Zähler (75) und mit einem Regler (77) zur Verarbeitung der Signale der beiden Fühler zur Regelung des Antriebs (73) des Changierfadenführers (71), dadurch gekennzeichnet, daß die Zähler (69, 75) eine für die gesamte Spulreise ausreichende Kapazität aufweisen und daß ein Rechner (76) permanent die sich jeweils ergebenden Gesamt-Zählerstände ins Verhältnis setzt und mit vorwählbaren Spulverhältnissen vergleicht und mit dem Regler (77) zur Regelung des Antriebs des Changierfadenführers (71) verbunden ist.

## Claims

1. Procedure for the precision crosswinding of ribbon-like or yarn-like material in which the integrals of the angular velocity (impulses) of the bobbin are recorded by a first sensor and added in a first allocated counter and the integrals of the angular velocity (impulses) of the drive for the traversing thread guide are recorded by a second sensor and added in a second allocated counter, the sums of the integrals of the angular velocity are compared with each other and the drive for the traversing thread guide regulated depending on this, **wherein** the impulses of the first sensor and the impulses of the second sensor are added each in their allocated counters during the entire winding operation, and the ratio of sums so produced is constantly compared with one or more successive, preselectable bobbin ratios, and the drive for the traversing thread guide is regulated in such a way that the ratio of the sums of the two allocated counters corresponds to the predefined bobbin ratio or ratios respectively during the entire winding operation.

2. Procedure according to claim 1, **wherein** a multiplicity of angular velocity (impulse) integrals are processed per revolution of the bobbin and per revolution of the drive for the traversing thread guide.

3. Procedure according to claim 2, **wherein** 1024 impulses are generated and processed per revolution.

4. Procedure according to one or several of the claims 1 to 3, **wherein** the drive for the traversing thread guide is regulated with an accuracy of ±1 angular degree.

5. Bobbin winder for executing the procedure according to one or several of the claims 1 to 4, having a drive (67) for the bobbin (66), a first allocated pulse generator (68), a topped counter (69), a drive (73) for the traversing thread guide (71), a second allocated pulse generator (74) and a topped second counter (75), and having a regulator (77) for processing the signals of the two sensors in order to regulate the drive (73) for the traversing thread guide (71), **wherein** the counters (69, 75) have a sufficient capacity for the entire winding operation, and a computer (76) permanently sets into ratios the occuring total counts of both counters and compares them with preselectable bobbin ratios, and is connected to the regulator (77) for regulating the drive for the traversing thread guide (71).

## Revendications

1. Procédé de bobinage d'un produit à bobiner en forme de ruban ou de Fil , envoyé à un dispositif de bobinage, en bobinage croisé de précision, dans lequel des intégrales de la vitesse angulaire (impulsions) de la bobine sont détectées avec un premier capteur et sont additionnées dans un premier compteur correspondant et des intégrales de la vitesse angulaire (impulsions) de l'entraînement de guide-fil va-et-vient sont détectées au moyen d'un second capteur et additionnées dans un second compteur correspondant, les sommes des intégrales des vitesses angulaires sont comparées entre elles et en Fonction de ceci l'entraînement du guide-fil va-et-vient est réglé, caractérisé en ce que les impulsions du premier capteur et les impulsions du second capteur sont additionnées dans les compteurs correspondants pendant tout le mouvement de la bobine, et en ce que le rapport des sommes ainsi obtenues est comparé en permanence avec un ou plusieurs rapports de bobinage à sélectionner l'un après l'autre et l'entraînement du guide-fil va-et-vient est réglé de manière que le rapport des sommes des deux compteurs correspondants corresponde pendant tout le mouvement de la bobine au rapport de bobinage donné ou aux rapports de bobinage.

2. Procédé selon la revendication 1, caractérisé en ce qu'un grand nombre dd'intégrales de la vitesse angulaire (impulsions) sont traitées par tour de la bobine et par tour de l'entraînement du guide-fil va-et-vient.

3. Procédé selon la revendication 2, caractérisé en ce que 1 024 impulsions sont produites et traitées par tour.

4. Procédé selon une ou plusieurs des revendication 1 à 3, caractérisé en ce que l'entraînement du guide-fil va-et-vient est réglé avec une précision de +/- 1 degré angulaire.

5. Dispositif de bobinage pour la mise en oeuvre du procédé selon une ou plusieurs des revendications 1 à 4, comportant un entraînement (67) pour la bobine (66) et un premier générateur d'impulsions (68) correspondant avec compteur (69) monté en aval, comportant un entraînement (73) pour le guide-Fil va-et-vient (71) et un second générateur d'impulsions (74) correspondant avec second compteur (75) monté en aval et comportant un régulateur (77) pour le traitement des signaux des deux capteurs en vue du réglage de l'entraînement (73) du guide-fil va-et-vient (71), caractérisé en ce que les compteurs (69, 75) présentent une capacité suffisante pour tout le mouvement de la bobine et en ce qu'un ordinateur (76) met en rapport, en permanence, les chiffres totaux des compteurs résultant dans chaque cas et les compare à des rapports de bobinage pouvant être présélectionnés et est relié au régulateur (77), en vue du réglage de l'entraînement du guide-fil va-et-vient (71).
